(19) Europäisches Patentamt
European Patent Office
Office européen des brevets

(11) EP 3 957 463 A1

(12) **EUROPEAN PATENT APPLICATION**
published in accordance with Art. 153(4) EPC

(43) Date of publication:
**23.02.2022 Bulletin 2022/08**

(21) Application number: **20791322.9**

(22) Date of filing: **21.02.2020**

(51) International Patent Classification (IPC):
***B29C 55/28*** (2006.01) ***B29L 7/00*** (2006.01)
***C08L 33/02*** (2006.01) ***C08L 101/00*** (2006.01)
***C08K 3/013*** (2018.01) ***C08K 3/26*** (2006.01)

(52) Cooperative Patent Classification (CPC):
**B29C 55/28; C08K 3/013; C08K 3/26; C08L 23/00; C08L 33/02; C08L 101/00**

(86) International application number:
**PCT/JP2020/007086**

(87) International publication number:
**WO 2020/213255 (22.10.2020 Gazette 2020/43)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **15.04.2019 JP 2019077391**

(71) Applicant: **TBM Co., Ltd.**
**Tokyo 100-0006 (JP)**

(72) Inventors:
- **NAKAMURA Hiroshi**
  **Tokyo 104-0061 (JP)**
- **MIZUNO Eiji**
  **Tokyo 104-0061 (JP)**
- **YAMAGUCHI Taichi**
  **Tokyo 104-0061 (JP)**

(74) Representative: **Papula Oy**
**P.O. Box 981**
**00101 Helsinki (FI)**

# (54) INORGANIC POWDER-FILLED RESIN COMPOSITION AND FORMED BODY

(57) Provided are an inorganic substance powder-filled resin composition having uniform dispersibility of inorganic substance powder and providing stable mechanical properties after forming even when the inorganic substance powder is highly filled and a formed article using the inorganic substance powder-filled resin composition. Provided is an inorganic substance powder-filled resin composition including a thermoplastic resin and inorganic substance powder in a mass ratio of 50:50 to 10:90, in which a neutralized product of a polymer made of 50% by mole to 100% by mole of an α,β-unsaturated carboxylic acid and 0% by mole to 50% by mole of another monomer as constitutional units is added. A formed body is prepared using this inorganic substance powder-filled resin composition.

EP 3 957 463 A1

## Description

Field

The present invention relates to an inorganic substance powder-filled resin composition and a formed body. More specifically described, the present invention relates to an inorganic substance powder-filled resin composition having excellent dispersibility of inorganic substance powder and allowing stable mechanical properties to be obtained, in particular, even in the form of a thin-thickness film and a formed body.

Background

Conventionally, thermoplastic resins have been widely used as materials for various industrial and household formed bodies, food packaging, formed packaging for general products, and the like together with paper materials derived from forest resources. However, environmental protection becomes an international issue now and thus reduction in the consumption amount of the thermoplastic resins and paper materials has been significantly studied in parallel with the viewpoint of allowing the thermoplastic resins and paper materials to be non-toxic, recyclable, and incinerated.

From such a viewpoint, an inorganic substance powder-filled resin composition formed by highly filling inorganic substance powder into a thermoplastic resin has been developed and put into practical use (refer to, for example, Patent Literature 1). In particular, calcium carbonate as the inorganic substance powder is a resource that is abundant in the nature and can preferably respond to requirement from the viewpoint of the environmental protection.

Incidentally, in the inorganic substance powder-filled resin composition made by highly filling the inorganic substance powder into the thermoplastic resin as described above, uniform dispersion of the inorganic substance powder in the thermoplastic resin has been difficult. In particular, inorganic substance powder having a small particle diameter is required to be used in an aspect where a formed article is a thin-thickness film such as an inflation film. The inorganic substance powder having a small particle diameter, however, easily generates agglomeration or the like in the thermoplastic resin and thus causes uneven distribution. Consequently, improvement in dispersibility has been required.

Conventionally, several methods have been developed in order to improve the dispersibility of the inorganic substance powder in the inorganic substance powder-filled resin composition as described above.

For example, Patent Literature 2 has developed blend of calcium carbonate particles having an average particle diameter of 0.1 $\mu$m to 0.3 $\mu$m and subjected to surface treatment with a higher fatty acid such as palmitic acid and stearic acid or a higher fatty acid salt with respect to 40% by mass to 95% by mass of crystalline polypropylene.

Patent Literature 3 has developed addition of a dispersing agent vesicled by a supercritical reverse phase evaporation method when 30 % by mass to 70% by mass of an inorganic filler is blended in an olefin-based resin and has described use of a higher fatty acid or a higher fatty acid salt as the dispersing agent.

Patent Literature 4 discloses that the water content of calcium carbonate particles measured between 200°C and 300°C by Karl Fischer method (heat vaporization method) is lowered to 150 ppm or less and that the surface is treated with a higher fatty acid or a higher fatty acid salt.

The various methods such as the surface treatment of the inorganic substance powder mainly using the higher fatty acid or the higher fatty acid salt, use of the specific dispersing agent using the supercritical technique, and the selection of calcium carbonate due to filler properties have been developed as disclosed in Patent Literature 2 to Patent Literature 4. These methods, however, have problems of, for example, lowered productivity due to an insufficient dispersion effect, inapplicability of common forming methods, requirement of complicated processes, and the like and thus sufficient solutions have not been achieved.

With respect to the slurry in which the inorganic substance powder is dispersed in an aqueous medium, different from the system in which the inorganic substance powder is blended in the resin composition, for example, Patent Literature 5 and Patent Literature 6 have disclosed that a neutralized product of a (co)polymer made of 50% by mole to 100% by mole of an $\alpha$,$\beta$-unsaturated carboxylic acid and 0% by mole to 50% by mole of other monomers is used as a dispersing agent when the slurry in which an inorganic pigment is dispersed in water is prepared. Patent Literature 7 discloses that, as the surface treatment of calcium carbonate particles as an inorganic dispersing agent used at the time of suspension polymerization of polystyrene, the calcium carbonate particles are treated with a (co)polymer containing the $\alpha$,$\beta$-unsaturated carboxylic acid as a monomer. In Patent Literature 5 to Patent Literature 7, however, dispersibility of the inorganic substance powder in the aqueous medium is considered when the (co)polymer containing the $\alpha$, $\beta$-unsaturated carboxylic acid as the monomer or the neutralized product thereof is used. The (co)polymer or the neutralized product thereof is used from the viewpoint of medium affinity between the inorganic substance powder and the aqueous medium, that is, balance of amphipathicity of hydrophilicity and lipophilicity. Therefore, in the case of the inorganic substance powder-filled resin composition as described above, it is difficult even for those skilled in the art to predict whether the dispersing agent used in the aqueous medium completely different from the melted thermoplastic resin effectively functions to the melted thermoplastic resin that is high temperature and high viscosity fluid and generally

hydrophobic. Considering that the dispersing agent exhibits excellent dispersibility in the aqueous medium, the dispersing agent is generally conceivable to be difficult to use.

Citation List

Patent Literature

Patent Literature 1: Japanese Patent Application Laid-open No. 2013-10931
Patent Literature 2: Japanese Patent Application Laid-open No. S56-120742
Patent Literature 3: Japanese Patent Application Laid-open No. 2017-19134
Patent Literature 4: Japanese Patent Application Laid-open No. 2012-148905
Patent Literature 5: Japanese Patent Application Laid-open No. H11-217534
Patent Literature 6: Japanese Patent Application Laid-open No. 2000-212371
Patent Literature 7: Japanese Patent Application Laid-open No. 2001-87639

Summary

Technical Problem

The present invention has been made in view of the actual situations described above. An object of the present invention is to provide an inorganic substance powder-filled resin composition having excellent dispersibility of inorganic substance powder, allowing stable mechanical properties to be obtained even when the resin composition is formed into the form of a thin-thickness film, and also having excellent forming processability thereof and to provide a formed body.

Solution to Problem

As a result of intensive study for solving the above-described problems, the inventors of the present invention have found that surprisingly, the addition of a dispersing agent made of a neutralized product of a polymer made of 50% by mole to 100% by mole of an $\alpha,\beta$-unsaturated carboxylic acid and 0% by mole to 50% by mole of another monomer as constitutional units to the inorganic substance powder-filled resin composition made by highly filling the inorganic substance powder into the thermoplastic resin can significantly improve dispersibility of the calcium carbonate without affecting other performances. Consequently, the present invention has been attained.

Namely, the present invention solving the above-described problems includes an inorganic substance powder-filled resin composition comprising: a thermoplastic resin and inorganic substance powder in a mass ratio of 50:50 to 10:90, in which a neutralized product of a polymer made of 50% by mole to 100% by mole of an $\alpha,\beta$-unsaturated carboxylic acid and 0% by mole to 50% by mole of another monomer as constitutional units is added is represented.

As one aspect of the inorganic substance powder-filled resin composition according to the present invention, the inorganic substance powder-filled resin composition in which the neutralized product of the polymer made of 50% by mole to 100% by mole of the $\alpha,\beta$-unsaturated carboxylic acid and 0% by mole to 50% by mole of the other monomer as the constitutional units is added in an amount of 3% by mass to 10% by mass relative to the entire composition is represented.

As one aspect of the inorganic substance powder-filled resin composition according to the present invention, the inorganic substance powder-filled resin composition in which the $\alpha,\beta$-unsaturated carboxylic acid is (meth)acrylic acid; and an weight average molecular weight of the neutralized product of the polymer made of 50% by mole to 100% by mole of the $\alpha,\beta$-unsaturated carboxylic acid and 0% by mole to 50% by mole of the other monomer as the constitutional units is 1,000 to 100,000 is represented.

As one aspect of the inorganic substance powder-filled resin composition according to the present invention, the inorganic substance powder-filled resin composition in which the other polymer is an aromatic ethylenically unsaturated monomer, an alkyl (meth)acrylate, and/or a sulfo group-containing monomer is represented.

As one aspect of the inorganic substance powder-filled resin composition according to the present invention, the inorganic substance powder-filled resin composition in which the inorganic substance powder is calcium carbonate particles is represented.

As one aspect of the inorganic substance powder-filled resin composition according to the present invention, the inorganic substance powder-filled resin composition in which an average particle diameter of the inorganic substance powder in accordance with an air permeation method is 0.5 $\mu$m to 13.5 $\mu$m is represented.

As one aspect of the inorganic substance powder-filled resin composition according to the present invention,

the inorganic substance powder-filled resin composition in which the inorganic substance powder is not subjected to surface treatment is represented.

Furthermore, the present invention solving the above-described problems includes a formed article constituted of an inorganic substance powder-filled resin composition, the resin composition comprising: a thermoplastic resin and inorganic substance powder in a mass ratio of 50:50 to 10:90, in which a neutralized product of a polymer made of 50% by mole to 100% by mole of an α, β-unsaturated carboxylic acid and 0% by mole to 50% by mole of another monomer as constitutional units is added.

As one aspect of the formed article according to the present invention, the formed article in which the formed article is an inflation film is represented.

## Advantageous Effects of Invention

According to the present invention, the resin composition highly blending the inorganic substance powder allows the highly filled inorganic substance powder to have excellent dispersibility in the resin and the formed body having excellent mechanical properties such as tensile strength and elongation to be obtained while moldability is being secured. In particular, in the case where the formed body is a thin-thickness inflation film, a formed body having excellent mechanical strength and excellent appearance properties can be obtained with excellent moldability.

## Description of Embodiments

Hereinafter, the present invention will be described in detail with reference to embodiments.

### «Inorganic substance powder-filled resin composition»

The inorganic substance powder-filled resin composition according to the present invention includes the thermoplastic resin and the inorganic substance powder in a mass ratio of 50:50 to 10:90 and further includes the neutralized product of the polymer made of 50% by mole to 100% by mole of the α,β-unsaturated carboxylic acid and 0% by mole to 50% by mole of the other monomer as the constitutional units. Hereinafter, each component constituting the inorganic substance powder-filled resin composition according to the present invention will be described in detail.

### «Thermoplastic resin»

The thermoplastic resin that can be used in the inorganic substance powder-filled resin composition according to the present invention is not particularly limited. Various types can be used depending on the use, function, and the like of the composition. Example of the thermoplastic resin include polyolefin-based resins such as polyethylene-based resins, polypropylene-based resins, polymethyl-1-pentene, and ethylene-cyclic olefin copolymers; functional group-containing polyolefin-based resins such as ethylene-vinyl acetate copolymers, ethylene-acrylic acid copolymers, ethylene-methacrylic acid copolymers, metal salts of ethylene-methacrylic acid copolymers (ionomers), ethylene-acrylic acid alkyl ester copolymers, ethylene-methacrylic acid alkyl ester copolymers, maleic acid-modified polyethylene, and maleic acid-modified polypropylene; polyamide-based resins such as nylon-6, nylon-6,6, nylon-6,10, and nylon-6,12; thermoplastic polyester-based resins including aromatic polyester resins such as polyethylene terephthalate and its copolymer, polyethylene naphthalate, and polybutylene terephthalate and aliphatic polyester-based resins such as polybutylene succinate and polylactic acid; polycarbonate-based resins including aromatic polycarbonates and aliphatic polycarbonates; polystyrene-based resins such as atactic polystyrene, syndiotactic polystyrene, acrylonitrile-styrene (AS) copolymers, and acrylonitrile-butadiene-styrene (ABS) copolymers; polyvinyl chloride-based resins such as polyvinyl chloride and polyvinylidene chloride; polyphenylene sulfides; and polyether-based resins such as polyethersulfone, polyetherketone, and polyetheretherketone. These thermoplastic resins can be used singly or in combination of two or more of them.

Of these thermoplastic resins, the polyolefin-based resins, the aromatic polyester-based resins, and the aliphatic polyester-based resins are preferably used from the viewpoints of easy formability, performance aspects, economy aspects, and the like.

Here, the polyolefin-based resins refer to polyolefin-based resins containing an olefin component unit as a main component. Specific examples of the polyolefin-based resins include the polypropylene-based resin and the polyethylene-based resin as described above, and in addition polymethyl-1-pentene and ethylene-cyclic olefin copolymers, as well as a mixture of two or more of these resins. The above phrase "as a main component" means that the olefin component unit is contained in the polyolefin-based resin in an amount of 50% by mass or more. The content of the olefin component unit is preferably 75% by mass or more, more preferably 85% by mass, and further preferably 90% by mass or more. The method for producing the polyolefin-based resin used in the present invention is not particularly limited. The polyolefin-based resin may be obtained by any of methods using a Ziegler-Natta catalyst, a metallocene catalyst, oxygen, a radical

initiator such as a peroxide, and the like.

Examples of the polypropylene-based resin include resins including a propylene component unit of 50% by mass or more. Examples of the resin include propylene homopolymers or copolymers of propylene and other $\alpha$-olefins copolymerizable with propylene. Examples of the other $\alpha$-olefins that can be copolymerized with propylene include $\alpha$-olefins having a carbon number of 4 to 10 such as ethylene, 1-butene, isobutylene, 1-pentene, 3-methyl-1-butene, 1-hexene, 3,4-dimethyl-1-butene, 1-heptene, and 3-methyl-1-hexene. As the propylene homopolymers, any of isotactic polypropylene, syndiotactic polypropylene, atactic polypropylene, hemiisotactic polypropylene, and linear or branched polypropylene exhibiting various degrees of stereoregularities are included. The above copolymer may be a random copolymer or a block copolymer and may be not only a binary copolymer but also a ternary copolymer. Specifically, examples thereof include an ethylene-propylene random copolymer, a butene-1-propylene random copolymer, an ethylene-butene-1-propylene random ternary copolymer, and an ethylene-propylene block copolymer. The other olefin copolymerizable with propylene in the above copolymer is preferably contained in a ratio of 25% by mass or less and particularly 15% by mass or less in the case where the total mass of the inorganic substance powder-filled resin composition is determined to be 100% by mass. The lower limit is preferably 0.3% by mass. These polypropylene-based resins can be used singly or in combination of two or more of them.

Examples of the polyethylene-based resin include resins having an ethylene component unit of 50% by mass or more. Examples of the polyethylene-based resin include high-density polyethylene (HDPE), low-density polyethylene (LDPE), medium-density polyethylene, linear low-density polyethylene (LLDPE), an ethylene-vinyl acetate copolymer, an ethylene-propylene copolymer, an ethylene-propylene-butene-1 copolymer, an ethylene-butene-1 copolymer, an ethylene-hexene-1 copolymer, an ethylene-4-methylpentene-1 copolymer, an ethylene-octene-1 copolymer, and a mixture of two or more of these resins.

Polyethylene having a density of 0.942 g/cm$^3$ or more is usually referred to as "high-density polyethylene (HDPE)", polyethylene having a density of 0.930 g/cm$^3$ or more and less than 0.942 g/cm$^3$ is usually referred to as "medium-density polyethylene", polyethylene having a density of 0.910 g/cm$^3$ or more and less than 0.930 g/cm$^3$ is usually referred to as "low-density polyethylene (LDPE)", and polyethylene having a density of less than 0.910 g/cm$^3$ is usually referred to as "ultra-low-density polyethylene (ULDPE)". "Linear low-density polyethylene (LLDPE)" usually has a density of 0.911 g/cm$^3$ or more and less than 0.940 g/cm$^3$ and preferably a density of 0.912 g/cm$^3$ or more and less than 0.928 g/cm$^3$.

Of the above-described polyolefin-based resins, the polypropylene-based resins are preferably used because they have a particularly excellent balance between mechanical strength and heat resistance.

«Inorganic substance powder»

The inorganic substance powder that can be blended in the inorganic substance powder-filled resin composition according to the present invention is not particularly limited. Examples of the inorganic substance powder include powder carbonates, sulfates, silicates, phosphates, borates, and oxides of calcium, magnesium, aluminum, titanium, iron, zinc, and the like, or hydrates thereof. Specific examples of the inorganic substance powder include calcium carbonate, magnesium carbonate, zinc oxide, titanium oxide, silica, alumina, clay, talc, kaolin, aluminum hydroxide, magnesium hydroxide, aluminum silicate, magnesium silicate, calcium silicate, aluminum sulfate, magnesium sulfate, calcium sulfate, magnesium phosphate, barium sulfate, silica sand, carbon black, zeolite, molybdenum, diatomaceous earth, sericite, shirasu, calcium sulfite, sodium sulfate, potassium titanate, bentonite, and graphite. These inorganic substance powders may be synthetic products or products originated from minerals. These inorganic substance powders may be used singly or in combination of two or more of them.

The shape of the inorganic substance powder is not particularly limited and may be any of a particle shape, a flake shape, a granule shape, and a fiber shape. The particle shape may be a spherical shape so as to be generally obtained by a synthesis method or an irregular shape so as to be obtained by pulverizing collected natural minerals.

As the inorganic substance powder, calcium carbonate, magnesium carbonate, zinc oxide, titanium oxide, silica, alumina, clay, talc, kaolin, aluminum hydroxide, magnesium hydroxide, and the like are preferable and calcium carbonate is particularly preferable. The calcium carbonate may be both of what is called light calcium carbonate prepared by a synthesis method and what is called heavy calcium carbonate obtained by mechanically pulverizing and classifying a natural raw materials including $CaCO_3$ as the main component such as limestone and the combination of these is also applicable. From the viewpoint of economic efficiency, the heavy calcium carbonate is preferable.

Here, the heavy calcium carbonate is a product obtained by mechanically pulverizing and processing natural limestone or the like and is clearly distinguished from synthetic calcium carbonate produced by chemical precipitate reaction or the like. The pulverizing method includes a dry method and a wet method. From the viewpoint of economic efficiency, the dry method is preferable.

The heavy calcium carbonate particles is different from, for example, light calcium carbonate produced by the synthesis method and is characterized by irregular shape properties of the surface and high specific surface area due

to particle formation performed by pulverizing treatment. Due to the irregular shape properties of the surface and high specific surface area of the heavy calcium carbonate particles as described above, the heavy calcium carbonate particles have more contact interfaces with the thermoplastic resin in the case where the heavy calcium carbonate particles are blended in the thermoplastic resin and thus provide the effect of uniform dispersion.

Although not particularly limited, the specific surface area of the heavy calcium carbonate particles, which is dependent on the average particle diameter of the heavy calcium carbonate, is desirably about 3,000 $cm^2/g$ or more and about 35,000 $m^2/g$ or less. Here, the specific surface area is determined in accordance with an air permeation method. With respect to the formed article to be obtained, the heavy calcium carbonate particles having the specific surface area within this range tend to reduce deterioration in processability of the resin composition due to the blend of the heavy calcium carbonate particles.

The irregular shape properties of the heavy calcium carbonate particles can be represented by the low degree of spheroidization of the particle shape. Although not particularly limited, specifically, the roundness is 0.50 or more and 0.95 or less, more preferably 0.55 or more and 0.93 or less, and further preferably 0.60 or more and 0.90 or less. The heavy calcium carbonate particles having the roundness within this range allow the strength as the product and forming processability to be appropriate in the case where the heavy calcium carbonate particles are blended into the thermoplastic resin to form the formed article.

Here, the roundness can be represented by (Projected area of particle)/(Area of a circle having the same perimeter as the projected perimeter of particle). The method for measuring the roundness is not particularly limited. For example, the projected area of the particle and the projected perimeter of the particle are measured from a micrograph and determined to be (A) and (PM), respectively. When the radius of a circle having the same perimeter as the projected perimeter of the particle is determined to be (r),

$$PM = 2\pi r \quad (1).$$

When the area of the circle having the same perimeter as the projected perimeter of the particle is determined to be (B),

$$B = \pi r^2 \quad (2).$$

Transforming Formula (1) results in

$$r = PM/2\pi \quad (3).$$

Therefore, substituting Formula (3) into Formula (2) results in

$$B = \pi \times (PM/2\pi)^2 \quad (4).$$

Therefore, the roundness is determined as Roundness = $A/B = A \times 4\pi/(PM)^2$.

The particles to be measured are sampled so as to represent the particle diameter distribution of the powder. As the number of the measured particles becomes larger, the measured value becomes more reliable. In consideration of the measurement time also, the roundness is said to be determined by the average value of about 100 particles. Also in the present specification, the average value of 100 particles is used. These measurements are performed with generally commercially available image analysis software using the projection image of each particle obtained by a scanning microscope, a stereomicroscope, or the like, whereby the roundness can be determined.

In order to enhance the dispersibility of the inorganic substance powder in the thermoplastic resin, the surface of the calcium carbonate particles may be previously modified in accordance with the common methods. Examples of the surface modification method include a method of physical treatment such as plasma treatment and a method of chemical treatment of the surface with a coupling agent or a surfactant. Examples of the coupling agent include a silane coupling agent and a titanium coupling agent. As the surfactant, any of an anionic surfactant, a cationic surfactant, a nonionic surfactant, and an amphoteric surfactant may be used. Examples of the surfactant include a higher fatty acid, a higher fatty acid ester, a higher fatty acid amide, and a higher fatty acid salt.

In the preferable embodiment of the present invention, as the inorganic substance powder to be used, however, inorganic substance powder that is not subjected to the surface treatment using the chemical treatment agent, or at least not subjected to the surface treatment with the fatty acid-based compound as described above are preferably used.

In the present invention, this is because the neutralized product of the polymer made of 50% by mole to 100%

by mole of the $\alpha,\beta$-unsaturated carboxylic acid and 0% by mole to 50% by mole of the other monomer as the constitutional units described in detail below is separately blended as the dispersing agent, whereby sufficient uniform dispersibility of the inorganic substance powder can be achieved, and thus on the contrary, uniform dispersibility may deteriorate by subjecting the surface of the inorganic substance powder to the surface treatment with the chemical treatment agent, in particular, the fatty acid-based compound. In addition, this is because use of the calcium carbonate particles not subjected to the surface treatment as described above allows the cause of odor due to the thermal decomposition of the surface treatment agent attached to the inorganic substance powder surface at the time of forming to be slightly eliminated. Therefore, as a particularly preferable embodiment of the present invention, use of the heavy calcium carbonate not subjected to the surface treatment as the inorganic substance powder to be used is included.

The inorganic substance powder is preferably particles. The average particle diameter is preferably 0.1 $\mu$m or more and 50.0 $\mu$m or less and more preferably 1.0 $\mu$m or more and 15.0 $\mu$m or less.

Although not particularly limited, in the case where the inorganic substance powder is the calcium carbonate particles, the average particle diameter is preferably within a range of 0.5 $\mu$m or more and 13.5 $\mu$m or less and more preferably 0.7 $\mu$m or more and 6.0 $\mu$m or less.

The average particle diameter of the inorganic substance powder or the calcium carbonate particles described in the present specification refers to a value calculated from the measurement result of the specific surface area by the air permeation method in accordance with JIS M 8511. As a measurement device, for example, a specific surface area measurement apparatus Type SS-100 manufactured by SHIMADZU CORPORATION can be preferably used.

In particular, the particles having a particle diameter of more than 50.0 $\mu$m are preferably excluded in the particle diameter distribution of the inorganic substance powder. On the other hand, excessively fine particles cause the viscosity at the time of kneading with the above thermoplastic resin to be significantly increased and thus the production of the formed body may be difficult. Therefore, the average particle diameter of the inorganic substance powder is preferably determined to be 0.5 $\mu$m or more.

The average particle diameter of the inorganic substance powder having the powder shape, the flake shape, or the granule shape is preferably 10.0 $\mu$m or less and more preferably 5.0 $\mu$m or less.

The average fiber length of the inorganic substance powder having the fiber shape is preferably 3.0 $\mu$m or more and 20.0 $\mu$m or less. The average fiber diameter is preferably 0.2 $\mu$m or more and 1.5 $\mu$m or less. The aspect ratio is usually 10 or more and 30 or less. The average fiber length and the average fiber diameter of the inorganic substance powder having the fiber shape are measured by observation using an electron microscope and the aspect ratio is a ratio of the average fiber length to the average fiber diameter (Average fiber length/Average fiber diameter).

The blend ratio of the thermoplastic resin and the inorganic substance powder (% by mass) included in the inorganic substance powder-filled resin composition according to the present invention is not particularly limited as long as the ratio is 50:50 to 10:90. The ratio is preferably in a ratio of 40:60 to 20:80 and preferably in a ratio of 40:60 to 25:75. This is because, in the blend ratio of the thermoplastic resin and the inorganic substance powder, given texture and physical properties such as impact resistance of the inorganic substance powder-filled resin composition provided by blending the inorganic substance powder are not obtained in the case where the ratio of the inorganic substance powder is less than 50% by mass, whereas forming process by, for example, extrusion forming, inflation molding, and vacuum forming is difficult in the case where the ratio of the inorganic substance powder is more than 90% by mass.

«Dispersing agent»

In the inorganic substance powder-filled resin composition, the neutralized product of the polymer made of 50% by mole to 100% by mole of the $\alpha,\beta$-unsaturated carboxylic acid and 0% by mole to 50% by mole of the other monomer as the constitutional units is included as the dispersing agent, in addition to the above-described thermoplastic resin and inorganic substance powder.

($\alpha$, $\beta$-Unsaturated carboxylic acid)

Examples of the $\alpha,\beta$-unsaturated carboxylic acid serving as the main constitutional unit of this polymer include $\alpha,\beta$-unsaturated carboxylic acids or anhydrides thereof such as acrylic acid, methacrylic acid, crotonic acid, maleic acid, maleic anhydride, fumaric acid, itaconic acid, itaconic anhydride, citraconic acid, citraconic anhydride, half esters of maleic acid (for example, maleic acid monobutyl ester and maleic acid monoethyl carbitol ester), half esters of fumaric acid (for example, fumaric acid monobutyl ester and fumaric acid monoethylcarbitol ester), or any combination of two or more of them.

Of these compounds, in particular, acrylic acid, methacrylic acid, itaconic acid, maleic acid, fumaric acid, half esters of maleic acid, and half esters of fumaric acid are preferable and acrylic acid and methacrylic acid are more preferable.

(Other monomers)

The polymer may contain other monomer copolymerizable with the α,β-unsaturated carboxylic acid as the constitutional unit of the polymer. Examples of the other monomer include, but are not limited to the following substances.

(a) Aromatic ethylenically unsaturated monomers: Styrenes such as styrene, α-methylstyrene, vinyltoluene, and hydroxystyrene, halogen substituents of styrenes such as dichlorostyrene, vinylnaphthalene, and the like;
(b) Aliphatic ethylenically unsaturated monomer having a carbon number of 2 to 20: Ethylene, propylene, butene, isobutylene, pentene, heptene, diisobutylene, octene, dodecene, octadecene, butadiene, isoprene, and the like;
(c) Alicyclic ethylenically unsaturated monomer having a carbon number of 5 to 15: Cyclopentadiene, pinene, limonene, indene, bicyclopentadiene, ethylidene norbornene, and the like;
(d) Alkyl (meth)acrylate having an alkyl group having a carbon number of 1 to 50: Methyl (meth)acrylate, ethyl (meth)acrylate, propyl (meth)acrylate, butyl (meth)acrylate, 2-ethylhexyl (meth)acrylate, dodecyl (meth)acrylate, hexadecyl (meth)acrylate, heptadecyl (meth)acrylate, eicosyl (meth)acrylate, and the like;
(e) Hydroxy group-containing (meth)acrylate: Hydroxyethyl (meth)acrylate, hydroxypropyl (meth)acrylate, and the like;
(f) Amide-containing ethylenically unsaturated monomer: (Meth)acrylamide, N-methylol (meth)acrylamide, and the like;
(g) Ethylenically unsaturated monomer having a polyalkylene glycol chain (molecular weight of 44 to 2,000): Polyethylene glycol (molecular weight of 300) mono(meth)acrylate, polypropylene glycol (molecular weight of 500) mono(meth)acrylate, methyl alcohol ethylene oxide 10-mol adduct (meth)acrylate, lauryl alcohol ethylene oxide 30-mol adduct (meth)acrylate, and the like;
(h) Sulfo group-containing monomer: Vinyl sulfonic acid, (meth)allylsulfonic acid, 2-hydroxy-3-(meth)allyloxypropanesulfonic acid, styrenesulfonic acid, α-methylstyrene sulfonic acid, sulfopropyl (meta)acrylate, 2-hydroxy-3-(meth)acryloyloxypropanesulfonic acid, 2-(meth)acryloylamino-2,2-dimethylethanesulfonic acid, 3-(meth)acryloyloxyethanesulfonic acid, 3-(meta)acryloyloxy-2-hydroxypropanesulfonic acid, 2-(meth)acrylamide-2-methylpropanesulfonic acid, 3-(meth)acrylamide-2-hydroxypropanesulfonic acid, alkyl (carbon number of 3 to 18) (meth)allylsulfosuccinic acids, sulfate esterified products of poly (n = 2 to 30) oxyalkylene mono(meth)acrylates (the oxyalkylene is an oxyalkylene having a carbon number of 2 to 4 and may be a homo, random, or block) [for example, a poly (n = 5 to 15) oxypropylene monomethacrylate sulfate esterified product, and the like], and other compounds represented by the following general formulas (I), (II), and (III).

[Chemical Formula 1]

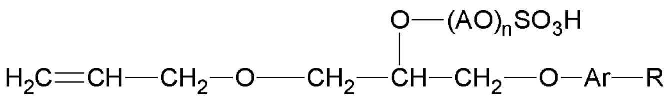

(1)

(In the formula, R represents an alkyl group having a carbon number of 1 to 15; A represents an alkylene group having a carbon number of 2 to 4, in the case where n is plural, "A"s may be the same as or different from each other, and in the case where "A"s are different from each other, "A" may be random or block; Ar represents a benzene ring; and n represents an integer of 1 to 50.)

[Chemical Formula 2]

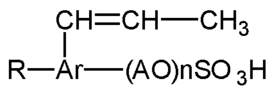

(2)

(In the formula, R represents an alkyl group having a carbon number of 1 to 15; A represents an alkylene group having a carbon number of 2 to 4, in the case where n is plural, "A"s may be the same as or different from each other, and in the case where "A"s are different from each other, "A"s may be random or block; Ar represents a benzene ring; and n represents an integer of 1 to 50.)

[Chemical Formula 3]

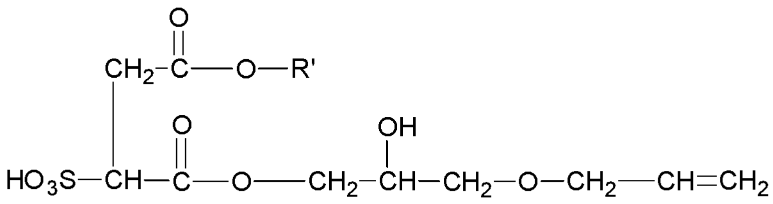

(3)

(In the formula, R' represents an alkyl group having a carbon number of 1 to 15 and optionally substituted with a fluorine atom.)

In the polymer, the content of the $\alpha,\beta$-unsaturated carboxylic acid as the constitutional unit is usually 50% by mole to 100% by mole and preferably 70% by mole to 100% by mole. On the other hand, the content of the other monomer is usually 0% by mole to 50% by mole and preferably 0% by mole to 30% by mole. Namely, the $\alpha$, $\beta$-unsaturated carboxylic acid as the constitutional unit having the content in the range of 50% by mole to 100% by mole allows an effective action to the dispersibility of the inorganic substance powder in the thermoplastic resin to be exhibited in the inorganic substance powder-filled resin composition.

Here, the other monomer is not limited to one kind and a plurality of kinds of monomers may be used. In addition, a copolymer made of a ternary component or a multinary component may be used. As described above, in the case where a plurality of kinds of monomers are used as the other monomers, the content of the other monomers described above is the total amount of such other monomers.

In the aspect in which the polymer is made by copolymerizing the $\alpha,\beta$-unsaturated carboxylic acid with the other monomer as described above, the preferable other monomer depends on the kinds of the above-described thermoplastic resin included in the inorganic substance powder-filled resin composition. Generally, the other monomer is preferably a monomer that is the same kind as or a similar kind to the monomer constituting the thermoplastic resin.

Furthermore, of the other monomers, (a), (b), (d), (e), (g), and (h) are preferable, and (a), (d), and (h) are particularly preferable. In the present invention, the acid group is usually a carboxylic acid group. In the case where (h) is used as the copolymerization component, however, the acid groups are the carboxylic acid group and the sulfonic acid group. The acid group as the monomer may be neutralized with an alkali metal, an alkaline earth metal, or an organic amine.

In the aspect in which the polymer is made by copolymerizing the $\alpha,\beta$-unsaturated carboxylic acid with the other monomer as described above, the polymer may have any sequence such as a random copolymer, a block copolymer, a graft copolymer, or an alternating copolymer. Of these copolymers, copolymers in the form of the block copolymer and the graft copolymer are particularly desirable.

Although not particularly limited, the weight average molecular weight of the polymer is usually 1,000 to 100,000. The weight average molecular weight is preferably 5,000 to 30,000 and the molecular weight distribution is usually 1.10 to 4.50 and preferably 1.1 to 2.5.

In the present invention, the neutralized product of the polymer is used as the dispersing agent. The degree of neutralization of the neutralized product is desirably at least 0.20 or more and more preferably 0.25 to 1.00. The neutralized product in which the acid groups in the polymer are neutralized to some extent or more as described above allows the dispersibility of the inorganic substance powder in the thermoplastic resin in which the neutralized product of the polymer is blended to be excellent.

Such a neutralized product can be obtained by using a monomer obtained by neutralizing the acid group (usually a carboxylic acid group) in the monomer to polymerize or subjecting the polymer to neutralization treatment after the polymer is obtained as described below.

In a preferable aspect, 18.8% by mole to 99.9% by mole and preferably 25.0% by mole to 99.9% by mole of the acid groups in the polymer are an alkali metal salt or an alkaline earth metal salt except a magnesium salt, 0.1% by mole to 1.2% by mole and preferably 0.6% by mole to 1.1% by mole of the acid groups are a magnesium salt, and 0% by mole to 80.0% by mole of the acid groups are free acid groups. In such an aspect, examples of the alkali metal include lithium, sodium, and potassium. In such an aspect, examples of the alkaline earth metal include calcium and barium.

In another preferable aspect, 10.0% by mole to 99.9% by mole, preferably 15.0% by mole to 94.9% by mole, and particularly preferably 20.0% by mole to 80.0% by mole of the acid groups in the polymer are an alkali metal salt or an alkaline earth metal salt, 0% by mole to 5.0% by mole, preferably 0% by mole to 4.0% by mole, and particularly preferably 0.1% by mole to 2.0% by mole of the acid groups are an organic amine salt, and 0% by mole to 90.0% by mole, preferably 5.0% by mole to 85.0% by mole, and particularly preferably 20.0% by mole to 80.0% by mole of the acid groups are free acid groups. In such an aspect, examples of the alkali metal include lithium, sodium, and potassium. In such an aspect, examples of the alkaline earth metal include calcium, magnesium, and barium.

Examples of the organic amine include aliphatic (primary, secondary, and tertiary) amines, alicyclic amines, aromatic amines, alkylene oxide adducts of the primary or secondary amines, and (poly)alkylene polyamines. Examples of the aliphatic amines include alkylamines having an alkyl group having a carbon number of 1 to 20. Examples of the primary amine include methylamine, ethylamine, n-butylamine, octylamine, decylamine, dodecylamine, tetradecylamine, hexadecylamine, octadecylamine, palm alkylamines, beef fat alkylamines, cured beef fat alkylamines, oleylamine, and soybean alkylamines. Examples of the secondary amines include dimethylamine, diethylamine, dibutylamine, dioctylamine, didecylamine, didodecylamine, ditetradecylamine, dihexadecylamine, dioctadecylamine, dioleylamine, dipalm alkylamines, and dicured beef fat alkyl amines. Examples of the tertiary amines include trimethylamine, triethylamine, tri-n-propylamine, tri-n-butylamine, diethyl-1-propylamine, octyldimethylamine, decyldimethylamine, dodecyldimethylamine, tetradecyldimethylamine, hexadecyldimethylamine, and octadecyldimethylamine. Examples of the alicyclic amine include cycloalkylamines having a cycloalkyl group and specific examples thereof include cyclopentylamine, cyclohexylamine, pyrrolidine, purine, dicyclohexylamine, cyclohexylmethylamine, N-methyl pyrrolidine, N-ethyl pyrrolidine, N-methyl piperidine, N-ethyl piperidine, N-methyl hexamethylene imine, N-ethyl hexamethylene imine, N-methyl morpholine, N-butyl morpholine, 1,5-diazabicyclo[4,3,0]-5-nonene, and 1,8-diazabicyclo[5,4,0]-7-undecene. Examples of the aromatic amine include aniline, benzylamine, toluidine, benzidine, pyrimidine, N,N-dimethylaniline, phenylenediamine (o, m, p), pyridine, 4-methylbenzimidazole, quinoline, and 4,4'-dipyridyl. Examples of the alkylene oxide of the alkylene oxide adduct of the primary or secondary amine include ethylene oxide, propylene oxide, and butylene oxide. The number of addition moles in these adducts is usually 1 mol to 5 mol and preferably 1 mol to 2 mol per active hydrogen. Specific examples thereof include a propylene oxide 2-mol adduct of cyclohexylamine and a propylene oxide 1 mol-adduct of dioctylamine. Examples of the (poly)alkylene polyamine include ethylenediamine, diethylenetriamine, triethylenetetramine, tetraethylenepentamine, and alkylated products thereof. Of the organic amines, the aliphatic or alicyclic amines or the alkylene oxide adducts thereof are preferable.

In order to obtain the neutralized product of the polymer by neutralization treatment after the polymerization of the polymer, for example, the polymer is neutralized with an alkali metal hydroxide, an alkaline earth metal hydroxide, an amine compound, or the like in an appropriate order so that the acid groups in the polymer are in a state of the salt and the free acid in a given ratio in the above-described preferable aspect, whereby the neutralized product of the polymer can be obtained. The neutralized product of the polymer can also be prepared by blending each separately prepared product in a state of the salt and the free acid in a given ratio.

For example, in the case where the polymer is the polymer described in the above preferable aspect, the neutralized product of the polymer can be obtained by neutralizing the polymer with an aqueous solution of an alkali metal hydroxide (for example, sodium hydroxide or potassium hydroxide) or a hydroxide of an alkaline earth metal except magnesium (for example, barium hydroxide or calcium hydroxide) and thereafter neutralizing with magnesium hydroxide so that 18.8% by mole to 99.9% by mole of the acid groups in the polymer are converted into the alkali metal salt or the salt of the alkaline earth metal except magnesium, 0.1% by mole to 1.2% by mole of the acid groups are converted into the magnesium salt, and 0% by mole to 80.0% by mole of the acid groups remain free acid groups.

In addition, for example, in the case where the polymer is the polymer described in another preferable aspect described above, the neutralized product of the polymer can be obtained by neutralizing the polymer with an aqueous solution of an alkali metal hydroxide (for example, sodium hydroxide or potassium hydroxide) or an alkaline earth metal hydroxide (for example, magnesium hydroxide or calcium hydroxide) and thereafter neutralizing with the organic amine so that 10.0% by mole to 100% by mole of the acid groups in the polymer are converted into the alkali metal salt or the alkaline earth metal salt, 0% by mole to 5.0% by mole of the acid groups are converted into the organic amine salt, and 0% by mole to 90.0% by mole of the acid groups remain free acid groups.

In the inorganic substance powder-filled resin composition according to the present invention, the neutralized product of the polymer made of 50% by mole to 100% by mole of the $\alpha,\beta$-unsaturated carboxylic acid and 0% by mole to 50% by mole of the other monomer as the constitutional units is preferably added in 3% by mass to 10% by mass and more preferably 5% by mass to 8% by mass relative to the entire composition. This is because the inorganic substance powder-filled resin composition having the amount to be added within such a range allows the dispersibility of the inorganic substance powder in the thermoplastic resin to be excellent and on the other hand does not provide an adverse effect to other physical, chemical, and functional properties.

«Other additives»

To the inorganic substance powder-filled resin composition according to the present invention, other additives can be blended as auxiliary agents, if necessary. As the other additives, for example, colorants, lubricating agents, coupling agents, flowability improvers, antioxidants, ultraviolet ray absorbers, flame retardants, stabilizers, antistatic agents, plasticizers, and the like may be blended. These additives may be used singly or in combination of two or more of them. These additives may be blended at the kneading process described below or may be previously blended to the inorganic substance powder-filled resin composition before the kneading process. In the inorganic substance powder-filled resin composition according to the present invention, the amount of these other additives to be added is not particularly limited as long as the given effect by the blend of the above the neutralized product of the polymer made of 50% by mole to 100% by mole of the α,β-unsaturated carboxylic acid and 0% by mole to 50% by mole of the other monomer as the constitutional units in addition to the above thermoplastic resin and inorganic substance powder is not impaired. For example, each of these other additives is desirably blended in a ratio of about 0% by mass to about 5% by mass and the ratio of the entire other additives is desirably 10% by mass or less in the case where the mass of the entire inorganic substance powder-filled resin composition is determined to be 100% by mass.

Hereinafter, the additives considered to be important in these additives will be described with reference to examples. The additives, however, are not limited to the additives exemplified below at all.

As the colorants, any of the known organic pigments, inorganic pigments, or dyes may be used. Specific examples include organic pigments such as azo-based, anthraquinone-based, phthalocyanine-based, quinacridone-based, isoindolinone-based, dioxazine-based, perinone-based, quinophthalone-based, and perylene-based pigments and inorganic pigments such as ultramarine blue, titanium oxide, titanium yellow, iron oxide (red iron oxide), chromium oxide, zinc white, and carbon black.

Examples of the lubricating agents include fatty acid-based lubricating agents such as stearic acid, hydroxystearic acid, complex stearic acid, and oleic acid; aliphatic alcohol-based lubricating agents; aliphatic amide-based lubricating agents such as stearoamide, oxystearamide, oleylamide, erucylamide, ricinolamide, behenamide, methylolamide, methylenebisstearamide, methylenebisstearobehenamide, higher fatty acid bisamides, and complex amides; aliphatic ester-based lubricating agents such as n-butyl stearate, methyl hydroxystearate, polyhydric alcohol fatty acid esters, saturated fatty acid esters, and ester-based wax; and fatty acid metal soap-based lubricating agents.

As the antioxidants, phosphorous-based antioxidants, phenol-based antioxidants, and pentaerythritol-based antioxidants may be used. The phosphorous-based antioxidants, more specifically, phosphorous-based antioxidants such as phosphite esters and phosphate esters are preferably used. Examples of the phosphites include triesters, diesters, and monoesters of phosphorous acid such as triphenyl phosphite, trisnonylphenyl phosphite, and tris(2,4-di-t-butylphenyl)phosphite.

Examples of the phosphate esters include trimethyl phosphate, triethyl phosphate, tributyl phosphate, trioctyl phosphate, triphenyl phosphate, tricresyl phosphate, tris(nonylphenyl) phosphate, and 2-ethylphenyl diphenyl phosphate. These phosphorous-based antioxidants may be used singly or in combination of two or more of them.

Examples of the phenol-based antioxidants include α-tocopherol, butylhydroxytoluene, sinapyl alcohol, vitamin E, n-octadecyl-3-(3,5-di-t-butyl-4-hydroxyphenyl) propionate, 2-t-butyl-6-(3'-t-butyl-5'-methyl-2'-hydroxybenzyl)-4-methylphenyl acrylate, 2,6-di-t-butyl-4-(N,N-dimethylaminomethyl)phenol, 3,5-di-t-butyl-4-hydroxybenzylphosphonate diethyl ester, and tetrakis[3-(3,5-di-t-butyl-4-hydroxyphenyl)propionyloxymethyl]methane. These phenol-based antioxidants may be used singly or in combination of two or more of them.

The flame retardant is not particularly limited. For example, a halogen-based flame retardant or a non-halogen-based flame retardant such as a phosphorus-based flame retardant and a metal hydrate may be used. Specific examples of the halogen-based flame retardant include a halogenated bisphenol-based compound such as a halogenated bisphenylalkane, a halogenated bisphenyl ether, a halogenated bisphenyl thioether, and a halogenated bisphenyl sulfone and a bisphenol-bis(alkylether)-based compound such as brominated bisphenol A, brominated bisphenol S, chlorinated bisphenol A, and chlorinated bisphenol S. Specific examples of the phosphorus-based flame retardant include aluminum tris(diethylphosphinate), bisphenol-A-bis-(diphenylphosphate), tri(isopropylated aryl) phosphates, cresyl-di-2,6-xylenyl phosphate, and an aromatic condensed phosphate. Specific examples of the metal hydrate include aluminum trihydrate, magnesium dihydroxide, and combination thereof. These flame retardants may be used singly or in combination of two or more of them. In addition, for example, antimony oxides such as antimony trioxide and antimony pentoxide, zinc oxide, iron oxide, aluminum oxide, molybdenum oxide, titanium oxide, calcium oxide, magnesium oxide, or the like can be used together as a flame retardant auxiliary.

The foaming agent is mixed or injected with pressure in the inorganic substance powder-filled resin composition serving as the raw material in a melted state in a melting kneader and is a substance that causes phase change from solid to gas or from liquid to gas or a substance that is gas itself. The foaming agent is mainly used for controlling the foaming ratio (foam density) of the foam sheet. As the foaming agent dissolved in the inorganic substance powder-filled resin composition serving as the raw material, the phase of a foaming agent that is liquid at normal temperature is changed into gas due to the temperature of the resin to dissolve in the melted resin and the phase of a foaming agent that is gas at normal temperature is not changed and the foaming agent is dissolved in the melted resin as it is. The foaming agent dispersed and dissolved in the melted resin expands inside a sheet at the time of extruding the melted resin from an extrusion die in a sheet-like form because the pressure is released and thus many fine closed cells are formed in the sheet to provide a foam sheet. The foaming agent acts as a plasticizer as a side effect that reduces the melt viscosity of the raw material resin composition and lowers the temperature for making the raw material resin composition in a plasticized state.

Examples of the foaming agent include aliphatic hydrocarbons such as propane, butane, pentane, hexane,

and heptane; alicyclic hydrocarbons such as cyclobutane, cyclopentane, and cyclohexane; halogenated hydrocarbons such as chlorodifluoromethane, difluoromethane, trifluoromethane, trichlorofluoromethane, dichloromethane, dichlorofluoromethane, dichlorodifluoromethane, chloromethane, chloroethane, dichlorotrifluoroethane, dichloropentafluoroethane, tetrafluoroethane, difluoroethane, pentafluoroethane, trifluoroethane, dichlorotetrafluoroethane, trichlorotrifluoroethane, tetrachlorodifluoroethane, and perfluorocyclobutane; inorganic gas such as carbon dioxide, nitrogen, and air; and water.

As the foaming agent, for example, a compound in which the active component of the foaming agent is contained in a carrier resin is also preferably used. Examples of the carrier resin include a crystalline olefin resin. Of these carrier resins, a crystalline polypropylene resin is preferable. Examples of the active component include hydrogen carbonates. Of these compounds, the hydrogen carbonates are preferable. The compound is preferably a foaming agent concentrate including the crystalline polypropylene resin as the carrier resin and the hydrogen carbonate as the thermally decomposable foaming agent.

The content of the foaming agent included in the foaming agent in the forming process can be appropriately determined depending on the kinds of the thermoplastic resin and inorganic substance powder, and a quantity of the active component. The content is preferably determined to be in the range of 0.04% by mass to 5.00% by mass in the case where the total mass of the inorganic substance powder-filled resin composition is determined to be 100% by mass.

In the aspect in which the inorganic substance powder-filled resin composition according to the present invention includes the foaming agent, the mass ratio (% by mass) of two components of the thermoplastic resin and the foaming agent is more preferably in a ratio of 80:20 to 98:2 and the ratio of 80:20 to 90:10 can be exemplified as a preferable example.

«Method for producing inorganic substance powder-filled resin composition»

In the method for producing the inorganic substance powder-filled resin composition according to the present invention, common methods can be used. The method may be appropriately determined depending on the forming method (for example, extrusion forming, injunction forming, and a vacuum forming). For example, the thermoplastic resin, the inorganic substance powder, the neutralized product of the polymer made of 50% by mole to 100% by mole of the $\alpha,\beta$-unsaturated carboxylic acid and 0% by mole to 50% by mole of the other monomer as the constitutional units, and, if necessary, other additives may be kneaded and melted before the materials are fed from a hopper to a forming machine or these materials may be integrally and simultaneously kneaded and melted with forming using a forming machine. Before adding the inorganic substance powder into the thermoplastic resin, the neutralized product of the polymer made of 50% by mole to 100% by mole of the $\alpha,\beta$-unsaturated carboxylic acid and 0% by mole to 50% by mole of the other monomer as the constitutional units and the inorganic substance powder may be subjected to mixing treatment. Alternatively, in contrast, the neutralized product of the polymer made of 50% by mole to 100% by mole of the $\alpha$, $\beta$-unsaturated carboxylic acid and 0% by mole to 50% by mole of the other monomer as the constitutional units and the thermoplastic resin may be subjected to the mixing treatment. The kneading and melting are preferably carried out by applying high shear stress to the kneading while the inorganic substance powder is being uniformly dispersed in the thermoplastic resin and preferably carried out using, for example, a twin-screw kneader to knead.

In the method for producing the inorganic substance powder-filled resin composition according to the present invention, the inorganic substance powder-filled resin composition may be in the form of pellets or may be different from the form of pellets. In the case where the thermoplastic resin composition is in the form of pellets, the shape of the pellets is not particularly limited. For example, pellets having a cylindrical shape, a spherical shape, an elliptical sphere shape, or the like may be formed.

The size of the pellets may be appropriately determined depending on the form. For example, in the case of the spherical pellets, the diameter may be 1 mm to 10 mm. In the case of the elliptical sphere shape pellets, the pellets may be an elliptical sphere shape having a ratio of a longitudinal length and a transverse length of 0.1 to 1.0 and a longitudinal and transverse size of 1 mm to 10 mm. In the case of cylindrical pellets, the pellets may have a diameter in the range of 1 mm to 10 mm and a length in the range of 1 mm to 10 mm. These shapes may be formed to the pellets after the kneading process described below. The shape of the pellets may be formed in accordance with the common methods.

(Formed article)

The formed article according to the present invention is a formed article formed by using the inorganic substance powder-filled resin composition.

The shape and the like of the formed article according to the present invention are not particularly limited. The shape may be various forms and the formed article may be formed as various formed articles such as a sheet or a film, a container for food, and other container body.

The thickness of the formed article according to the present invention is not particularly limited and may be various thickness from a thin-thickness to a thick thickness depending on the form of the formed article. For example, the formed article preferably having a thickness of 40 μm or more and 5,000 μm or less and more preferably having a thickness of 50 μm or more and 1,000 μm or less is exhibited. The formed article having the thickness within the range allows the formed article having no problems of formability and processability, not causing uneven thickness, being uniform, and having no defect to be formed due to uniform dispersion of the inorganic substance powder in the thermoplastic resin.

In particular, in the case where the form of the formed article is a sheet, the thickness of the sheet is desirably more preferably 50 μm to 1,000 μm and further preferably 50 μm to 400 μm. The sheet having the thickness within such a range can be suitably used instead of paper or synthetic paper for the applications of general printing and information and packaging.

As the molded product according to the present invention, an aspect in which the formed article is a film formed by extrusion molding (blow film molding) by an inflation method, that is, what is called an inflation film is desirable. In the case where the formed article according to the present invention is such a thin-thickness inflation film, the effect caused by adding the neutralized product of the polymer made of 50% by mole to 100% by mole of the α,β-unsaturated carboxylic acid and 0% by mole to 50% by mole of the other monomer as the constitutional units as described above is particularly high. Consequently, remarkably stable mechanical properties (for example, tensile strength and elongation) throughout the film can be obtained while the inorganic substance powder such as the calcium carbonate particles is being highly filled.

In the case of the aspect in which the formed article according to the present invention is the inflation film, the film can be a dense film. Alternatively, the inflation film may be a breathable film having gas permeability that includes a high content of the inorganic substance powder and is subjected to stretch by air blowing of inflation molding to form micropores formed in the film layer.

Although not particularly limited, in the case where the inflation film is the breathable film, the air permeance is 5,000 seconds or more and 85,000 seconds or less. The term "air permeance" referred to here is a value measured in accordance with JIS P8117 (JIS P8117: 2009 "Paper and board-Determination of air permeance and air resistance (medium range)- Gurley method"). More specifically, the time (seconds) when 100 cc of air passes through the breathable film having an area of 2,500 $mm^2$ in an atmospheric air at 23°C using a JIS P8117 compliant Gurley type air permeance meter and this time is determined to be the air permeance (seconds). The number of seconds is measured by a digital auto-counter. The smaller value of the air permeance indicates the higher air permeability.

The use of the inflation film is not particularly limited and the inflation film can be used for many different applications. Although not particularly limited, for example, the inflation film is used for sanitary applications, medical applications, healthcare applications, filtration materials, geotextile products, agricultural applications, horticultural applications, clothing, footwear products, bag products, household applications, industrial applications, packaging applications, architecture applications, or construction.

More specific examples of the sanitary applications include surface layer materials such as paper diapers for babies, paper diapers for adults, women's sanitary products, and adult incontinence care products, hair removal strips, bandages and wound bandages, disposable bath towels and face towels, disposable slippers and footwear, surface sheets or cover stocks, and face masks for consumers.

More specific examples of the medical and healthcare applications include sterilizable medical products, medical packaging, caps such as surgical disposable caps, protective clothing, surgical gowns, surgical masks and face masks, surgical gowns, surgical covers, surgical drapes, wraps, packs, sponges, bandages, wipes, bed linens, anti-contamination gowns, inspection gowns, laboratory white robes, isolation gowns, transdermal drug delivery pads, underpads, treatment packs, heat packs, ostomy bag liners, fixing tapes, incubator mattresses, sterile wrap cold/heat packs, and patches.

More specific examples of the clothing, footwear products, and bag products include overcoat fronts, collars, facings, waistbands, cores such as lower collars, disposable underwear, shoelace pit reinforcement materials, athletic shoe and sandal reinforcement materials, shoe constituent materials such as inner sole linings, bag constituent materials, binder compositions, and (washing) precaution labels.

More specific examples of the packaging applications include desiccant packaging, adsorbent packaging, gift boxes, file boxes, non-woven fabric bags, book covers, envelopes, and home delivery bags.

More specific examples of the architecture and construction applications include house wraps, asphalt coatings, road and railroad roadbeds, wall covering linings, acoustic wall coverings, roofing and tile underlays, soil stabilizing materials and road underlays, foundation stabilizing materials, sheets for erosion control, irrigation canal construction, drainage systems, frost shields, ponds and irrigation canals, sand intrusion barriers for culvert drainage, and agricultural versatile sheets.

«Method for producing formed article»

The method for producing the formed article according to the present invention is not particularly limited as long as the formed article can be formed in a desired shape. The formed article can be formed and processed in any conventionally known methods such as extrusion forming (including extrusion forming by the inflation method), injection forming, vacuum forming, blow forming, and calendar forming. Furthermore, in the case where the inorganic substance powder-filled resin composition according to the present invention includes the foaming agent and the formed article of an aspect serving as the foaming body is obtained, for example, both liquid phase forming methods such as injection forming, extrusion foaming, and blow foaming or solid phase foaming such as bead foaming, batch foaming, press foaming, and secondary foaming under normal pressure may be used as long as these methods allow the desired shape to be formed.

The forming temperature at forming cannot be simply determined because the temperature varies to a certain extent depending on the forming method, the type of the thermoplastic resin to be used, and the like. For example, the forming article formed at a temperature of 180°C to 260°C and more preferably 190°C to 230°C allows the inorganic substance powder-filled resin composition according to the present invention to have the excellent drawdown property and extension property and the formed article having the predetermined shape to be formed without locally generating degeneration of the composition.

As the forming, a direct method in which a process for kneading the inorganic substance powder-filled resin composition and a process for forming to the given shape such as a sheet or a film are continuously carried out may be used or a method for using a twin-screw extrusion forming machine with a T die system may be used. In the case of forming the sheet-like product, the sheet-like product can be stretched in a uniaxial direction, biaxial directions, or multi-axial directions (for example, stretching by a tubular method) at the forming or after the forming of the sheet-like product. In the case of the biaxial stretching, the stretching may be sequential biaxial stretching or simultaneous biaxial stretching.

In the aspect in which the formed article according to the present invention is the inflation film, the extrusion molding by the inflation method, which is the method for producing the inflation film, is not particularly limited. For example, the film is desirably treated in a blow ratio (BUR) of 2.0 to 5.0 and more preferably 3.0 to 5.0 in order to obtain uniform air permeability performance throughout the film.

Examples

Hereinafter, the present invention will be specifically described with reference to Examples. Examples are described only for the purpose of exemplifying the specific aspects and embodiments in order to more facilitate the understanding of the concept and scope of the present invention disclosed in the present specification and described in the attached CLAIMS and the present invention is not limited to Examples in any manner.

(Evaluation methods)

Each physical property in Examples and Comparative Examples described below was evaluated in accordance with the following methods.

(Average molecular weight of polymer)

The weight average molecular weight (Mw) of the neutralized product of the polymer made of the $\alpha,\beta$-unsaturated carboxylic acid (and the other monomer) used in Examples and Comparative Examples was measured by gel permeation chromatography (GPC). The molecular weight is a value when the polymer is completely neutralized with sodium hydroxide.

GPC measurement conditions

Model: Waters 510 (manufactured by Nihon Waters K. K.)
Column: TSK gel G5000pwXL, TSK gel G3000pwXL (both are manufactured by Tosoh Corporation)
Column temperature: 40°C
Detector: RI
Solvent: 0.5% sodium acetate-water/methanol (volume ratio 70/30)
Flow rate: 1.0 ml/min
Sample concentration: 0.25% by weight

Injection volume: 200 μl
Standard: Polyoxyethylene glycol (manufactured by Tosoh Corporation; TSK STANDARD POLYETHYLENE OXIDE)
Data processing unit: SC-8010 (manufactured by Tosoh Corporation)

(Degree of neutralization)

The degree of neutralization of the neutralized product of the polymer made of the α,β-unsaturated carboxylic acid (and the other monomer) used in Examples and Comparative Examples was measured using an automated potentiometric titrator. More specifically, a predetermined amount of an inorganic base (potassium hydroxide or sodium hydroxide) solution having a known concentration was added to the neutralized product of the polymer to obtain a liquid to be measured of which pH is adjusted to the alkaline side. Thereafter, the liquid to be measured was subjected to potential differential titration using an inorganic acid solution (sulfuric acid or hydrochloric acid) to measure the amount of acid groups in the polymer and the degree of neutralization was calculated. The kind and proportion of the neutralized salt in the neutralized product were determined based on the substance used for neutralization and the amount of the substance.

(Average particle diameter of inorganic substance powder)

The average particle diameter was calculated from the measurement result of a specific surface area by an air permeation method in accordance with JIS M 8511 using a specific surface area measurement apparatus Type SS-100 manufactured by SHIMADZU CORPORATION.

(Tensile strength and elongation)

The tensile strength and elongation were measured using Autograph AG-100kNXplus (manufactured by SHIMADZU CORPORATION) under conditions of 23°C and 50% RH in accordance with JIS K 7161-2:2014. The test specimen was formed by cutting out the formed article described below and had a dumbbell shape. The stretching speed was 10 mm/minute.

(Thickness)

The thickness of the obtained breathable film was measured in accordance with JIS P7130.

(Product appearance)

The appearance of the surface of the molded film was visually inspected and evaluated according to the following evaluation criteria.

[Evaluation criteria]

○: No pinholes, irregularities, scratches, or the like are observed on the surface at all and the surface has excellent appearance.
Δ: Slightly shallow irregularities are observed on the surface.
×: A fatal defects for a film such as a pinhole are observed on the surface.

(Materials)

The components used in Examples and Comparative Examples described below were as follows.

• Thermoplastic resins (A)

A1: Polypropylene homopolymer (manufactured by Prime Polymer Co., Ltd.: Prime Polypro (trade name) E111G, melting point 160°C)

A2: Polypropylene block copolymer (manufactured by Prime Polymer Co., Ltd.: Prime Polypro (trade name) BJS-MU, melting point 160°C)
A3: High-density polyethylene homopolymer (manufactured by KEIYO POLYETHYLENE CO., LTD.: B5803, melting point 133°C)

• Inorganic substance powders (B)

B1: Heavy calcium carbonate particles. Average particle dimeter 0.70 μm (Softon 3200, manufactured by Bihoku Funka Kogyo Co., Ltd.)
B2: Heavy calcium carbonate particles Average particle diameter 0.85 μm (Softon 2600, manufactured by Bihoku Funka Kogyo Co., Ltd.)
B3: Heavy calcium carbonate particles Average particle diameter 1.00 μm (Softon 2200, manufactured by Bihoku Funka Kogyo Co., Ltd.)
B4: Heavy calcium carbonate particles Average particle diameter 1.50 μm (Softon 1500, manufactured by Bihoku Funka Kogyo Co., Ltd.)
B5: Heavy calcium carbonate particles Average particle diameter 3.60 μm (BF100, manufactured by Bihoku Funka Kogyo Co., Ltd.)
B6: Heavy calcium carbonate particles Average particle size 5.00 μm (BF200, manufactured by Bihoku Funka Kogyo Co., Ltd.)
B7: Heavy calcium carbonate particles (without surface treatment) Average particle diameter 8.00 μm (BF300, manufactured by Bihoku Funka Kogyo Co., Ltd.)
B8: Light calcium carbonate particles Average particle diameter 1.5 μm (PC, manufactured by Shiraishi Kaisha Ltd.)

• Dispersing agents (C)

$C_A$ Neutralized product of polyacrylic acid (weight average molecular weight Mw: 11,500)
$C_{A1}$ neutralization degree: 100.0%, Neutralized salt: Sodium/Magnesium = 99.0/1.0
$C_{A2}$ Neutralization degree: 90.0%, Neutralized salt: Sodium/Magnesium = 89.5/0.5
$C_{A3}$ Neutralization degree: 70.0%, Neutralized salt: Sodium/Magnesium = 69.7/0.3
$C_{A4}$ Neutralization degree: 50.0%, Neutralized salt: Sodium/Magnesium = 49.8 0.2
$C_{A5}$ Neutralization degree: 30.0%, Neutralized salt: Sodium/Magnesium = 29.3/0.7
$C_{A6}$ Neutralization degree: 50.0%, Neutralized salt: Sodium/Lauryldimethylamine/Magnesium = 46.0/3.0/1.0
$C_{a7}$ Neutralization degree: 62.0%, Neutralized salt: Sodium/Propylene oxide 2-mol adduct of cyclohexylamine = 60.0/2.0
$C_{A8}$ Neutralization degree: 47.1%, Neutralized salt: Sodium/Propylene oxide 4-mol adduct of octadecylamine = 47.0/0.1
$C_{A9}$ Neutralization degree: 50.0%, Neutralized salt: Sodium = 50.0
$C_{A0}$ Neutralization degree: 0% (polyacrylic acid)
$C_B$ Neutralized product of acrylic acid/2-acrylamido-2-methylpropanesulfonic acid copolymer (weight average molecular weight Mw: 8,000)
$C_{B1}$ Neutralization degree: 99.8%, Neutralized salt: Sodium/Magnesium = 99.0/0.8
$C_{B2}$ Neutralization degree: 70.0%, Neutralized salt: Sodium/Magnesium = 69.7/0.3
$C_{B3}$ Neutralization degree: 50.0%, Neutralized salt: Sodium/Magnesium = 49.8/0.2
$C_{B4}$ Neutralization degree: 30.0%, Neutralized salt: Sodium/Magnesium = 29.3/0.7
$C_{B5}$ Neutralization degree: 50.0%, Neutralized salt: Sodium = 50.0
$C_{B0}$ Neutralization degree: 0% (polyacrylic acid) • Antistatic agent (D)
D: Lauric acid diethanolamide

• Lubricating agent (E)

E: Sodium alkane sulfonate (carbon number of alkyl group (average value) = 12)

• Antioxidants (F)

F1: Hindered phenolic antioxidant (pentaerythritol tetrakis[3- (3',5'-di-t-butyl-4'-hydroxyphenyl) propionate]
F2: Tris(2,4-di-t-butylphenyl)phosphite

Example 1

Polypropylene homopolymer A1 as the thermoplastic resin (A), B1 described above as the inorganic substance powder (B), and $C_{A3}$ described above as the dispersing agent (C) were used in the blend proportions listed in Table 1. D, E, and F1 and F2 were used as the antistatic agent, the lubricating agent, and the antioxidants in appropriate amounts, respectively and the total amount thereof was set to 6.0 parts by mass. The blend amount of the antistatic agent, lubricating agent, and antioxidants were the same in other Examples and Comparative Examples described below except in Example 24. In Table 1, the numerical values of each component are values in parts by mass.
The film was prepared by an inflation film extrusion line (a circular die having a diameter of 60 mm, a die gap of 1.2 mm, a screw diameter of 30 mm, and a L/D ratio of 30). The film was treated in a BUR (blow-up ratio) of 3.0 to retain the frostline height at a height of 16 cm (the distance from the die).
In the extruder, the temperature of each zone was set to 190°C to 230°C. The rotation speed of the extruder was always maintained at 60 rpm and the basis weight of the film was set to 35 g/$m^2$ by appropriate adjustment of the line speed. The cooling air flow was adjusted accordingly to keep the frostline at the same position.
The evaluation results of the tensile strength, elongation, thickness, and product appearance of the obtained film are listed in Table 2.

Examples 2 and 3 and Reference Examples 1 and 2

Films were prepared by the inflation method in the same manner as the manner in Example 1 except that the blending amount of $C_{A3}$ as the dispersing agent (C) used in Example 1 was changed as listed in Table 1. The evaluation results of the tensile strength, elongation, thickness, and product appearance of the obtained films are listed in Table 2.

Comparative Example 1

A Film was prepared by the inflation method in the same manner as the manner in Example 1 except that $C_{A3}$ as the dispersing agent (C) used in Example 1 was not blended. The evaluation results of the tensile strength, elongation, thickness, and product appearance of the obtained films are listed in Table 2.

Examples 4 to 16 and Comparative Examples 2 and 3

Films were prepared by the inflation method in the same manner as the manner in Example 2 except that each of the dispersing agents listed in Table 1 was used instead of $C_{A3}$ as the dispersing agent (C) used in Example 2. The evaluation results of the tensile strength, elongation, thickness, and product appearance of the obtained films are listed in Table 2.

Examples 17 to 23

Films were prepared by the inflation method in the same manner as the manner in Example 2 except that each of B2 to B8 was used instead of B1 as the inorganic substance powder (B) used in Example 2. The evaluation results of the tensile strength, elongation, thickness, and product appearance of the obtained films are listed in Table 2.

Example 24

A film was prepared by the inflation method in the same manner as the manner in Example 2 except that the antistatic agent (D), the lubricating agent (E), and the antioxidant (F) used in Example 2 were not blended. The evaluation results of the tensile strength, elongation, thickness, and product appearance of the obtained films are listed in Table 2.

Examples 25 and 26

Films were prepared by the inflation method in the same manner as the manner in Example 2 except that each

of A2 and A3 was used instead of A1 as the thermoplastic resin (A) used in Example 2. The evaluation results of the tensile strength, elongation, thickness, and product appearance of the obtained films are listed in Table 2.

Examples 27 to 29

Films were prepared by the inflation method in the same manner as the manner in Example 2 except that the blend amounts of the thermoplastic resin (A) and inorganic substance powder (B) in Example 2 were changed as listed in Table 1. The evaluation results of the tensile strength, elongation, thickness, and product appearance of the obtained films are listed in Table 2.

[Table 1]

| | Thermoplastic resin (A) (part by mass) | Inorganic substance powder (B) (part by mass) | Dispersing agent (C) (part by mass) | Total amount of D, E, F1, and F2 (part by mass) |
|---|---|---|---|---|
| Comparative Example 1 | A1/40 | B1/60 | - | 6.0 |
| Reference Example 1 | A1/40 | B1/60 | $C_{A3}$/1 | 6.0 |
| Example 1 | A1/40 | B1/60 | $C_{A3}$/4 | 6.0 |
| Example 2 | A1/40 | B1/60 | $C_{A3}$/7 | 6.0 |
| Example 3 | A1/40 | B1/60 | $C_{A3}$/10 | 6.0 |
| Reference Example 2 | A1/40 | B1/60 | $C_{A3}$/15 | 6.0 |
| Example 4 | A1/40 | B1/60 | $C_{A1}$/7 | 6.0 |
| Example 5 | A1/40 | B1/60 | $C_{A2}$/7 | 6.0 |
| Example 6 | A1/40 | B1/60 | $C_{A4}$/7 | 6.0 |
| Example 7 | A1/40 | B1/60 | $C_{A5}$/7 | 6.0 |
| Example 8 | A1/40 | B1/60 | $C_{A6}$/7 | 6.0 |
| Example 9 | A1/40 | B1/60 | $C_{A7}$/7 | 6.0 |
| Example 10 | A1/40 | B1/60 | $C_{A8}$/7 | 6.0 |
| Example 11 | A1/40 | B1/60 | $C_{A9}$/7 | 6.0 |
| Comparative Example 2 | A1/40 | B1/60 | $C_{A0}$/7 | 6.0 |
| Example 12 | A1/40 | B1/60 | $C_{B1}$/7 | 6.0 |
| Example 13 | A1/40 | B1/60 | $C_{B2}$/7 | 6.0 |
| Example 14 | A1/40 | B1/60 | $C_{B3}$/7 | 6.0 |
| Example 15 | A1/40 | B1/60 | $C_{B4}$/7 | 6.0 |
| Example 16 | A1/40 | B1/60 | $C_{B5}$/7 | 6.0 |
| Comparative Example 3 | A1/40 | B1/60 | $C_{B0}$/7 | 6.0 |
| Example 17 | A1/40 | B2/60 | $C_{A3}$/7 | 6.0 |
| Example 18 | A1/40 | B3/60 | $C_{A3}$/7 | 6.0 |
| Example 19 | A1/40 | B4/60 | $C_{A3}$/7 | 6.0 |
| Example 20 | A1/40 | B5/60 | $C_{A3}$/7 | 6.0 |
| Example 21 | A1/40 | B6/60 | $C_{A3}$/7 | 6.0 |

(continued)

| | Thermoplastic resin (A) (part by mass) | Inorganic substance powder (B) (part by mass) | Dispersing agent (C) (part by mass) | Total amount of D, E, F1, and F2 (part by mass) |
|---|---|---|---|---|
| Example 22 | A1/40 | B7/60 | $C_{A3}$/7 | 6.0 |
| Example 23 | A1/40 | B8/60 | $C_{A3}$/7 | 6.0 |
| Example 24 | A1/40 | B1/60 | $C_{A3}$/7 | - |
| Example 25 | A2/40 | B1/60 | $C_{A3}$/7 | 6.0 |
| Example 26 | A3/40 | B1/60 | $C_{A3}$/7 | 6.0 |
| Example 27 | A1/30 | B1/70 | $C_{A3}$/7 | 6.0 |
| Example 28 | A1/20 | B1/80 | $C_{A3}$/7 | 6.0 |
| Example 29 | A1/10 | B1/90 | $C_{A3}$/7 | 6.0 |

[Table 2]

| | Tensile strength (MPa) | Elongation (%) | Thickness (μm) | Product appearance | Remarks |
|---|---|---|---|---|---|
| Comparative Example 1 | 24 | 260 | 90-100 | Δ | Thickness varies |
| Reference Example 1 | 30 | 300 | 100 | ○ | - |
| Example 1 | 31 | 300 | 100 | ○ | - |
| Example 2 | 32 | 300 | 100 | ○ | - |
| Example 3 | 31 | 310 | 100 | ○ | - |
| Reference | 30 | 310 | 100 | ○ | - |
| Example 2 | | | | | |
| Example 4 | 32 | 320 | 100 | ○ | - |
| Example 5 | 31 | 310 | 100 | ○ | - |
| Example 6 | 31 | 310 | 100 | ○ | - |
| Example 7 | 32 | 320 | 100 | ○ | - |
| Example 8 | 31 | 320 | 100 | ○ | - |
| Example 9 | 32 | 310 | 100 | ○ | - |
| Example 10 | 31 | 300 | 100 | ○ | - |
| Example 11 | 32 | 310 | 100 | ○ | - |
| Comparative Example 2 | 25 | 250 | 95-105 | Δ | Thickness slightly varies |
| Example 12 | 31 | 300 | 100 | ○ | - |
| Example 13 | 31 | 320 | 100 | ○ | - |
| Example 14 | 32 | 310 | 100 | ○ | - |
| Example 15 | 31 | 320 | 100 | ○ | - |
| Example 16 | 32 | 300 | 100 | ○ | - |
| Comparative Example 3 | 25 | 250 | 95-105 | Δ | Thickness slightly varies |

(continued)

| | Tensile strength (MPa) | Elongation (%) | Thickness (μm) | Product appearance | Remarks |
|---|---|---|---|---|---|
| Example 17 | 31 | 320 | 100 | ○ | - |
| Example 18 | 31 | 310 | 100 | ○ | - |
| Example 19 | 31 | 310 | 100 | ○ | - |
| Example 20 | 32 | 300 | 100 | ○ | - |
| Example 21 | 31 | 310 | 100 | ○ | - |
| Example 22 | 31 | 300 | 100 | ○ | - |
| Example 23 | 32 | 320 | 100 | ○ | - |
| Example 24 | 31 | 320 | 100 | ○ | - |
| Example 25 | 30 | 300 | 100 | ○ | - |
| Example 26 | 29 | 320 | 100 | ○ | - |
| Example 27 | 31 | 300 | 100 | ○ | - |
| Example 28 | 32 | 310 | 100 | ○ | - |
| Example 29 | 31 | 300 | 100 | ○ | - |

As can be seen from the results listed in Table 2, in Examples according to the present invention, even in a high blending amount of the inorganic substance powder, the inorganic substance powder was uniformly dispersed in the resin component without uneven distribution, which allowed the inflation molding to be stably performed without any problem, and the formed article having excellent appearance of the formed article and excellent mechanical properties was able to be obtained.

Example 30

The inorganic substance powder-blended thermoplastic resin composition having the same composition as the resin composition in Example 1 was formed into a sheet at a temperature of 220°C using a twin-screw extruder with a T-die and thereafter the obtained sheet was vacuum-formed into a container product having a deep-dish shape at a temperature of 220°C. As a result, as similar to the case of Example 1, the container product having sufficient mechanical properties and excellent appearance was able to be produced without causing any troubles at the time of the processing.

## Claims

**1.** An inorganic substance powder-filled resin composition comprising:

a thermoplastic resin and inorganic substance powder in a mass ratio of 50:50 to 10:90, wherein
a neutralized product of a polymer made of 50% by mole to 100% by mole of an α,β-unsaturated carboxylic acid and 0% by mole to 50% by mole of other monomer as constitutional units is added.

**2.** The inorganic substance powder-filled resin composition according to claim 1, wherein the neutralized product of the polymer made of 50% by mole to 100% by mole of the α,β-unsaturated carboxylic acid and 0% by mole to 50% by mole of the other monomer as the constitutional units is added in an amount of 3% by mass to 10% by mass relative to the entire composition.

**3.** The inorganic substance powder-filled resin composition according to claim 1 or 2, wherein

the α,β-unsaturated carboxylic acid is (meth)acrylic acid, and
a weight average molecular weight of the neutralized product of the polymer made of 50% by mole to 100% by mole of the α,β-unsaturated carboxylic acid and 0% by mole to 50% by mole of the other monomer as the constitutional units is 1,000 to 100,000.

**4.** The inorganic substance powder-filled resin composition according to any one of claims 1 to 3, wherein the other polymer is an aromatic ethylenically unsaturated monomer, an alkyl (meth)acrylate, and/or a sulfo group-containing monomer.

**5.** The inorganic substance powder-filled resin composition according to any one of claims 1 to 4, wherein the inorganic substance powder is calcium carbonate particles.

**6.** The inorganic substance powder-filled resin composition according to any one of claims 1 to 5, wherein an average particle diameter of the inorganic substance powder in accordance with an air permeation method is 0.5 μm or more and 13.5 μm or less.

**7.** The inorganic substance powder-filled resin composition according to any one of claims 1 to 6, wherein the inorganic substance powder is not subjected to surface treatment.

**8.** A formed article comprising an inorganic substance powder-filled resin composition, the resin composition comprising:

a thermoplastic resin and inorganic substance powder in a mass ratio of 50:50 to 10:90, wherein
a neutralized product of a polymer made of 50% by mole to 100% by mole of an α,β-unsaturated carboxylic acid and 0% by mole to 50% by mole of another monomer as constitutional units is added.

**9.** The formed article according to claim 8, wherein the formed article is an inflation film.

**INTERNATIONAL SEARCH REPORT**

International application No. PCT/JP2020/007086

A. CLASSIFICATION OF SUBJECT MATTER
Int. Cl. B29C55/28(2006.01)i, B29L7/00(2006.01)n, C08L33/02(2006.01)i, C08L101/00(2006.01)i, C08K3/013(2018.01)i, C08K3/26(2006.01)i
FI: C08L101/00, C08K3/013, C08L33/02, C08K3/26, B29C55/28, B29L7:00
According to International Patent Classification (IPC) or to both national classification and IPC

B. FIELDS SEARCHED

Minimum documentation searched (classification system followed by classification symbols)
Int. Cl. B29C55/28, B29L7/00, C08L33/02, C08L101/00, C08K3/013, C08K3/26

Documentation searched other than minimum documentation to the extent that such documents are included in the fields searched
Published examined utility model applications of Japan 1922-1996
Published unexamined utility model applications of Japan 1971-2020
Registered utility model specifications of Japan 1996-2020
Published registered utility model applications of Japan 1994-2020

Electronic data base consulted during the international search (name of data base and, where practicable, search terms used)
JSTPlus/JMEDPlus/JST7580 (JDreamIII)

C. DOCUMENTS CONSIDERED TO BE RELEVANT

| Category* | Citation of document, with indication, where appropriate, of the relevant passages | Relevant to claim No. |
|---|---|---|
| X | JP 2014-534317 A (LUBRIZOL ADVANCED MATERIALS, INC.) 18 December 2014, claims 1, 7, 14, 15, paragraphs [0089], [0091], [0102], [0107], [0111], [0123], [0127]-[0135] | 1-9 |
| X | JP 55-133438 A (NITTO FUNKA KOGYO KK) 17 October 1980, claims 1, 2, 4, page 2, lower right column, line 19 to page 3, upper left column, line 6, examples 1, 6, 7 | 1-9 |
| X | JP 55-165960 A (KAO CORP.) 24 December 1980, claims 1, 2, page 3, upper left column, lines 11-14, page 4, lower left column, lines 8-11, page 5, lower left column, lines 7-12, examples 1-3, 6-8, comparative example 5, reference examples 1 | 1-9 |

☒ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 21.04.2020 | 28.04.2020 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2020/007086

C (Continuation). DOCUMENTS CONSIDERED TO BE RELEVANT

| Category* | Citation of document, with indication, where appropriate, of the relevant passages | Relevant to claim No. |
|---|---|---|
| A | JP 11-217534 A (SANYO CHEMICAL INDUSTRIES, LTD.) 10 August 1999, entire text | 1-9 |
| A | CN 102351230 A (HUNAN LEIXIN NEW MATERIAL TECHNOLOGY CO., LTD.) 15 February 2012, entire text | 1-9 |

Form PCT/ISA/210 (continuation of second sheet) (January 2015)

**INTERNATIONAL SEARCH REPORT**
Information on patent family members

International application No.
PCT/JP2020/007086

| Patent Documents referred to in the Report | Publication Date | Patent Family | Publication Date |
|---|---|---|---|
| JP 2014-534317 A | 18.12.2014 | US 2014/0288227 A1<br>claims, paragraph [0129], examples<br>WO 2013/063209 A2<br>EP 2771418 A1<br>CN 103917609 A<br>KR 10-2014-0088580 A | |
| JP 55-133438 A | 17.10.1980 | (Family: none) | |
| JP 55-165960 A | 24.12.1980 | (Family: none) | |
| JP 11-217534 A | 10.08.1999 | WO 1999/023185 A1<br>all document<br>CN 1242794 A<br>KR 10-2000-0069839 A | |
| CN 102351230 A | 15.02.2012 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2013010931 A
- JP S56120742 A
- JP 2017019134 A
- JP 2012148905 A
- JP H11217534 A
- JP 2000212371 A
- JP 2001087639 A